# EUROPEAN PATENT SPECIFICATION

(11) **EP 2 868 243 B1**
(45) Date of publication and mention of the grant of the patent: **08.05.2019**
(21) Application number: 13191377.4
(22) Date of filing: 04.11.2013
(51) Int. Cl.: A47J 31/00, B64D 11/04, A47J 31/06, A47J 31/36, A47J 31/44, A47J 31/46, B64D 11/00

(54) **Mobile device for producing beverages**
Mobile Vorrichtung zur Herstellung von Getränken
Dispositif mobile pour la production de boissons

(43) Date of publication of application: 06.05.2015
(73) Proprietor: Airbus Operations GmbH, 21129 Hamburg (DE)
(72) Inventor: Reiss, Matthias, 21129 Hamburg (DE); Becker, Ole, 21129 Hamburg (DE); Kiehne, Oliver, 21129 Hamburg (DE)
(74) Representative: Schicker, Silvia

(56) References cited:
- WO-A1-02/48018
- WO-A1-92/06617
- CH-A2- 699 674
- DE-U1- 9 314 494
- US-A1- 2012 318 822

## Description

The invention relates to a mobile device for producing beverages, in particular coffee products, which is suitable for use on board of a vehicle, specifically on board of an aircraft. Further, the invention relates to an arrangement comprising a mobile device for producing beverages of this kind and a docking station suitable for interacting with the mobile device for producing beverages.

Currently, coffee products on board of an aircraft are prepared using coffee maker units which are installed in an aircraft galley. For example, a standard coffee maker unit may be installed in an aircraft galley according to WO 2007/096000 A1 using an interface system described in DE 10 2009 024 210 B4 and WO 2010/0142420 A1 for connecting the coffee maker unit to an electrical power supply system as well as to a water system of the aircraft. At present, aircraft galleys may be equipped with a coffee maker which brews coffee with hot water and/or with an espresso maker which brews espresso with pressurized water or steam and which also might include a froth function. While a coffee maker which brews coffee with hot water is suitable to produce a sufficient amount of coffee for supplying also a large number of passengers on board the aircraft, the quality of the brewed coffee might be considered limited. On the other hand, currently used espresso makers produce high quality coffee products, but only one or two cups during one operating cycle. For quality purposes, espresso must be served immediately for it not to become bitter or cold. This would involve cabin crew to walk around the cabin a large number of times. These devices thus are not appropriate for serving a large number of passengers.

US 20102/0318822 A1 describes a trolley for preparing and serving drinks which includes a container for hot water and a container with coffee or tea concentrate. These containers are connected to supply openings of a dispensing head by means of supply ducts and pumps upon actuation of a control unit. Electricity is provided by a power supply in the form of a chargeable battery.

EP 2 583 598 A1 relates to a food carrier or trolley which comprises an operating unit adapted to prepare and dispense beverages obtained by infusion such as teas, coffee and the like. The operating unit is supplied with electric energy from an electric battery of 24 V nominal voltage and 30 A/h capacity which allows 200 cups of coffee to be produced and dispensed on the spot.

CH 669 674 A2 discloses a cart for use in public transport which comprises a coffee machine with a water tank, a heater and a pump. A battery is provided to a base portion of the cart and supplies electrical power to the coffee machine via an inverter.

The invention is directed at the object of specifying a mobile device which is capable of producing high quality beverages, in particular coffee products, on the spot in a large number and without considerable service interruptions. Further, the invention is directed to the object of providing an arrangement comprising a mobile device for producing beverages of this kind and a docking station suitable for interacting with the mobile device for producing beverages.

This object is achieved by a mobile device having the features of Claim 1 and an arrangement having the features of Claim 13.

A mobile device according to the invention for producing beverages, in particular coffee products, comprises a trolley base body. The mobile device in particular is intended to be used for serving passengers on board of a passenger vehicle such as, for example, a train, a boat, a bus or an aircraft. In case the mobile device should be used for supplying passengers on board of an aircraft with beverages, in particular coffee products, the trolley base body may have the design of a typical full size or half size aircraft trolley also in the industry known or referred to as a cart which is suitable for being stored in a standard trolley storage provided on board of the aircraft, for example in the region of an aircraft galley. The trolley base body may be provided with wheels so as to allow the mobile device to be easily moved to passenger seats occupied with passengers who should be supplied with the beverages produced by means of the mobile device.

The mobile device further comprises a water tank which may be filled with water necessary for producing the beverages. The size of the water tank may be adapted to the intended use of the mobile device, in particular the intended number of servings of beverages which should be produced by the mobile device in one operation cycle without refilling the water tank. For example, a mobile device which is intended to be used for serving only a small number of first class passengers on board of an aircraft may be provided with a smaller water tank than a mobile device which is intended to supply beverages to a large number of economy class passengers on board of an aircraft. Both, full size and half size trolley variants of the water tank are possible. The water tank is thermally insulated allowing hot water stored within the water tank to be held at its elevated temperature. In particular, the thermal insulation of the water is designed so as to allow hot water having a temperature of approximately 80 to 85°C to be stored within the water tank for at least one operation cycle of the mobile device without cooling to an extent that a substantial reheating of the water is required.

The mobile device further is equipped with a brewing unit which is connected to the water tank via a water supply line. Hence, via the water supply line, water from the water tank can be supplied to the brewing unit, wherein the water is used for producing beverages, in particular hot beverages such as coffee products or tea. The brewing unit allows hot beverages, in particular life-style coffee products such as ristretto, espresso or cappuccino, to be produced on the spot with a high quality and may comprise a brew head of any desired design. For example, the brew head of the brewing unit may comprise a portafilter for receiving espresso powder or may be adapted to make use of various forms of single serving package coffee products, such as pads or capsules. The brewing unit may also comprise a pressurization/vaporization device which is suitable for pressurizing/vaporizing the water supplied to the brewing unit from the water tank via the water supply line to an extent which is necessary for producing high quality coffee products.

The brewing unit further may be provided with a brewing unit outlet via which a beverage produced by the brewing unit can be dispensed from the brewing unit. The brewing unit outlet may comprise a coffee/espresso outlet for dispensing coffee/espresso and a hot water outlet for dispensing hot water, for example for preparing tea. The hot water outlet preferably is connected to the water supply line connecting the water tank to the brewing unit via a bypass line bypassing the brew head for preparing coffee/espresso. Further, it is conceivable to equip the brewing unit of the mobile device with two brewing unit outlets arranged at opposing sides of the brewing unit. In case the mobile device is used on board of an aircraft for supplying aircraft passengers with beverages, crew members standing in a main aisle of the aircraft in front and behind the mobile device then can simultaneously draw beverages from the mobile device.

The mobile device for producing beverages further comprises a heating device which is adapted to heat water received within the water tank. Preferably, the heating device is suitable to heat the water received within the water tank to a temperature of at least 80 to 85°C, i.e. a temperature which allows the water to be used for producing high quality coffee products within the brewing unit. The heating device, for example, may comprise a heater coil which is arranged within the water tank and surrounded by the water received within the water tank and thus, when being heated, transfers heat to the water received within the water tank.

Finally, the mobile device comprises an electrical interface which is connectable to an electrical power supply system of a docking station. The docking station may be provided at any location suitable for storing the mobile device. In case the mobile device is intended for use on board of an aircraft, the docking station, for example, may be located in the region of an aircraft galley or bar. The electrical power supply system of the docking station, for example, may be adapted to connect the docking station to a central electrical power supply system and thus a central electrical power source of the vehicle. It is, however, also conceivable to provide the docking station with an independent electrical power source, for example in the form of an accumulator, a fuel cell or the like, which, via the electrical power supply system of the docking station, is connectable to the electrical interface of the mobile device. The electrical interface of the mobile device is connected to the heating device of the mobile device in order to supply electrical power from the electrical power supply system of the docking station to the heating device when the electrical interface is connected to the electrical power supply system of the docking station. In other words, when the mobile device, via its electrical interface, is connected to the electrical power supply system of the docking station, the heating device is supplied with electrical power for heating the water received within the water tank from the electrical power supply system of the docking station.

In the mobile device, the water received within the water tank advantageously is heated while the mobile device is connected to the docking station thus allowing the major consumption of electrical power occurring while the mobile device is connected to an external electrical power source. A large and heavy internal electrical power source as it is used, for example, in the prior art food carrier or trolley known from EP 2 583 598 A1 thus can be dispensed with. The mobile device therefore can be of a relatively small sized and lightweight design. Further, the mobile device can be operated without considerable service interruptions, since a time consuming recharging process for recharging an internal electrical power source of the mobile device is no longer necessary. In summary, the mobile device allows to produce high quality beverages, in particular coffee products, while simultaneously being easy to handle and to operate also during long service periods without significant service i nterru ptions.

The mobile device preferably comprises a conveying device which is arranged in the water supply line for conveying water from the water tank to the brewing unit. The conveying device, for example, may be designed in the form of a pump which should, however, be suitable to convey water having a temperature of at least approximately 80 to 85°C from the water tank to the brewing unit. Preferably, the conveying device is driven by pressurized gas supplied to the conveying device from a pressurized gas bottle. The conveying device thus, during operation, does not have to be provided with electrical power. The pressurized gas bottle preferably is filled with pressurized air.

A pressurized gas control valve may be arranged in a pressurized gas line connecting the pressurized gas bottle to the conveying device. By means of the gas control valve, the supply of pressurized gas from the pressurized gas bottle to the conveying device and thus the operation of the conveying device may be controlled as desired.

The mobile device may further comprise a compressor for filling the pressurized gas bottle with pressurized gas. The compressor preferably is connected to the electrical interface of the mobile device in order to be supplied with electrical power from the electrical power supply system of the docking station when the electrical interface is connected to the electrical power supply system of the docking station. Hence, a period of time while the mobile device is not in use and connected to the docking station can be utilized for refilling the pressurized gas bottle, wherein the electrical power consumed by the compressor is provided from an external electrical power source. As an alternative, it is, however, also conceivable to equip the mobile device with an exchangeable pressurized gas bottle which can be quickly exchanged when empty, e.g. as part of the catering delivery during A/C turn-around, and which may be recharged externally or also may be disposed. A compressor for refilling the pressurized gas bottle with pressurized gas while the pressurized gas bottle is installed within the mobile device then may be dispensed with allowing the mobile device to be designed particularly small-sized and lightweight.

In general, the water tank of the mobile device may be designed to store hot water which is heated to a maximum temperature possible without pressurizing the tank. For example, the water tank may be designed so as to be suitable for storing hot water which is heated to a temperature of approximately 80 to 85°C. It is, however, also conceivable to equip the mobile device with a water tank which is designed in the form of a pressure tank suitable to store water at a pressure which allows the water received within the water tank to be supplied to the brewing unit in a pressure-driven manner, i.e. without the aid of an additional conveying device. In a mobile device which is equipped with a pressure tank such that the water received within the water tank can be supplied to the brewing unit in a pressure-driven manner, a conveying device, a pressurized gas control valve, a pressurized gas line, a pressurized gas bottle and a compressor for refilling the pressurized gas bottle may be omitted. The mobile device then may be of a particularly lightweight and small-sized design. In case, the water tank is designed in the form of a pressure tank, the heating device preferably is adapted to heat the water received within the water tank beyond its boiling point in order to pressurize the water to the desired pressure.

The mobile device may further comprise a flow meter which is arranged in the water supply line for sensing the flow of water through the water supply line. Further, a water flow control valve may be arranged in the water supply line, in particular downstream of the flow meter, for controlling the flow of water through the water supply line. The operation of the water flow control valve may be controlled in dependence of signals indicative of the flow of water through the water supply line which are provided by the flow meter. Further, the signals provided by the flow meter may be used to control the operation of the conveying device and the pressurized gas control valve.

The mobile device may further comprise a supplementary heating device which is arranged in the water supply line for supplementary heating the water flowing through the water supply line. Preferably, the supplementary heating device is designed in the form of a flow heater and arranged either closely upstream of the brewing unit or integrated into the brewing unit. By means of the supplementary heating device, the water which is supplied to the brewing unit from the water tank can be heated in case the temperature of the water is not sufficient for producing high quality beverages, in particular coffee products, by means of the brewing unit. The supplementary heating device, however, compared to the heating device, distinguishes by a much less electrical power consumption, since it is just operated for supplementary heating the water flowing through the water supply line instead of the heating cool water to the desired temperature at which the water should be supplied to the brewing unit.

The mobile device may further comprise a user actuatable control panel. The user actuatable control panel may arranged on the brewing unit and may be provided with at least one selector button which is actuatable by a user for selecting the type of beverage to be produced by means of the brewing unit. Further, the mobile device may comprise a froth module for preparing milk froth. The froth module may be integrated into the brewing unit or may be formed as a separate device. Further, the mobile device may be provided with a sink which may be placed in a region of a top surface of the mobile device and which preferably is disposed underneath a brewing unit outlet of the brewing unit. The sink then may be used for collecting liquids spilled from the brewing unit outlet of the brewing unit. If desired, the sink may be provided with a water tap which may be connected to the water supply line, for example via a suitable branch line branching off the water supply line upstream of the brewing unit. Water dispensed from the water tap may, for example, be used for rinsing cups with hot water prior to filling the cups with hot beverages. This serves to pre-heat the cup and ensures the desired temperature of the beverage when provided to customer.

The mobile device may further comprise a first storage compartment which may be heated by means of a storage compartment heater. The first storage compartment then may be used, for example, to store cups, for example espresso cups, which should be pre-heated prior to being filled with hot beverages. In particular espresso then may be provided at an optimum temperature. The mobile device may further comprise at least one second unheated storage compartment. The at least one second unheated storage compartment, for example, may be used to store food, napkins, spoons and/or cold beverages, such that the mobile device may be used for serving passengers on board the vehicle in a particularly flexible manner.

In case the mobile device should be used on board of an aircraft, the trolley base body of the mobile device may be designed in dependence on the desired number and size of storage compartments, in particular second storage compartments of the mobile device. For example, the trolley base body may be designed in the form of a standard full size aircraft trolley base body in case plural storage compartments, in particular second storage compartments of a considerable size should be provided. In case the mobile device should be of a particularly small size and should have a low weight, less or no storage compartments may be provided allowing the trolley base body to be designed in the form of a standard half size aircraft trolley base body.

The mobile device may be used to supply passengers on board of a vehicle with payable items, wherein payments for the payable items may be executed by means of a wireless device which, via a wireless connection, is connected to a communication system of the vehicle, for example an in-flight entertainment system of an aircraft. In order to allow an easy and comfortable access to the wireless device for executing the payments for the payable items, the mobile device may be provided with a wireless device holder, for example in the form of an iPad® stand. The wireless device holder may be releasably connected to a top surface of the trolley base body such that the wireless device easily accessible while the mobile device is in use, but can be released from the mobile device when the mobile device is not in use and, for example, connected to the docking station.

In a preferred embodiment, the mobile device further comprises a rechargeable accumulator which is connected to at least one electrical power consumer of the mobile device in order to supply electrical power to the electrical power consumer of the mobile device when the electrical interface of the mobile device is disconnected from the electrical power supply system of the docking station. Electrical power consumers may, for example, be the heating device, the brewing unit, the pressurized gas control valve, the flow meter, the water flow control valve, the supplementary heating device, the froth module and the storage compartment heater. The rechargeable accumulator thus allows the electrical power consumers of the mobile device to be supplied with electrical power also when the mobile device is not connected to the docking station, i.e. when the mobile device is in service for supplying passengers on board of the vehicle with beverages. Due to the fact that the majority of the electrical power consumption of the electrical power consumers of the mobile device, in particular the heating device occurs while the mobile device is connected to the docking station, the rechargeable accumulator, however, can be relatively small-sized and lightweight. The accumulator may have sufficient capacity to allow to supply the mobile device for more than one operating cycle. Such that, when the mobile device is in the docking station to reheat/refill water, the crew does not have to wait considerable time for the accumulator to re-charge.

The rechargeable accumulator further may be connected to the electrical interface of the mobile device in order to be supplied with electrical power from the electrical power supply system of the docking station when the electrical interface is connected to the electrical power supply system of the docking station. Hence, when the mobile device is connected to the docking station, the rechargeable accumulator may be recharged using electrical power provided by an external electrical power source, wherein, however, due to the small size of the accumulator, the charging time is relatively short allowing the accumulator to be fully recharged during short service interruptions of the mobile device.

The mobile device may further comprise a control unit which is connected to at least one a first sensing device for sensing a water level within the water tank, a second sensing device for sensing a charging state of the rechargeable accumulator and a third sensing device for sensing a pressure within the pressurized gas bottle. The control unit may further be adapted to calculate the approximate number of remaining servings of beverages based on the signals provided by the at least one of the first and the second sensing device. The control unit then may output a corresponding signal indicating the approximate number of remaining servings of beverages to a display device, in particular a display device of the user actuatable control panel such that a user is alerted early enough that the water tank has to be refilled, that the rechargeable accumulator has to be recharged and/or that the pressurized gas bottle has to be refilled or replaced.

The control unit which is adapted to receive the respective signals from the at least one of the first, the second and the third sensing device and to calculate the approximate number of remaining servings of beverages may be formed integral with a control unit for controlling the operation of one or more component(s) of the mobile device, for example the heating device, the brewing unit, the water flow control valve, the pressurized gas control valve and the like, but may also be designed in the form of a separate control unit. The control unit for controlling the operation of one or more component(s) of the mobile device and/or the control unit which is adapted to receive the respective signals from the sensing device(s) and to calculate the approximate number of remaining servings of beverages may further be adapted to operate the mobile device in a cleaning and disinfection/decalcification mode, allowing automatic cleaning and/or decalcification of the mobile device.

The mobile device for producing beverages, in particular coffee products, may further comprise a water interface which is connectable to at least one of a water supply system and a water drain system of the docking station. The mobile device then is particularly comfortable to operate, since, via the water interface, the water tank can be refilled with water in a comfortable manner. Further, water may be drained from the water tank in a similarly comfortable manner. It is, however, also conceivable to equip the mobile device with a water tank which has to be manually refilled and/or manually drained. Further, a plumming may be arranged that all water contents will flow in the water tank when the system is not pressurized. This is to allow full drainage of hygiene and ice protection purposes. The water drain system preferably is adapted to allow drainage of water/residual water by gravity only.

In a preferred embodiment of the mobile device, at least one of the brew head of the brewing unit and the froth module is releasably connected to the trolley base body. Further the brewing unit may be releasably connected to the trolley base body. The brew head and the froth module usually are the only components of the mobile device which are contaminated with substances other than water and air. In case the brew head and the froth module are releasably connected to the base body, the brew head and the froth module can easily be released from the trolley base body for cleaning and disinfection. Further, the mobile device can very quickly be put into service again even in case the brew head and the froth module have to be cleaned by simply replacing the brew head and the froth module unit which have to be cleaned by a clean and disinfected replacement brew head and froth module. Further, in case the mobile device is provided with a releasable brewing unit, the brewing unit can be released from the mobile device for storage purposes.

Alternatively or additionally thereto, at least one of the brewing unit and the froth module may be retractably connected to the trolley base body. In particular, the trolley base body may be provided with at least one of a brewing unit receiving space and a froth module receiving space into which the brewing unit and the froth module, respectively, may be lowered when the mobile device is not in service for storage purposes. The brewing unit storage space and/or the froth module storage space thus preferably are disposed adjacent to a top surface of the mobile device onto which the brewing unit and/or the froth module may be placed when the mobile device is in service. It is, however, also conceivable to store at least one of the brewing unit and the froth module in a brewing unit storage space and a froth module storage space, respectively, which is/are provided at any desired location within the trolley base body when the mobile device is not in service. A top surface of the trolley base body then may be provided with an interface via which the brewing unit and/or the froth module may be electrically connected to the rechargeable accumulator and the water supply line of the mobile device when the mobile device is in service and the brewing unit and/or the froth module is/are placed on a top surface of the trolley base body.

An arrangement, which is in particular suitable for installation on board a vehicle, comprises at least one mobile device as described above. Further, the arrangement comprises a docking station which is equipped with an electrical power supply system. The electrical power supply system of the docking station is connectable to the electrical interface of the mobile device in order to supply electrical power to the mobile device.

The docking station of the arrangement may further comprise at least one of a water supply system and a water drain system which is connectable to a water interface of the mobile device.

A mobile device and/or an arrangement as described above in general may be used on board of any passenger vehicle, such as, for example, a boat, a train, a bus and the like. The mobile device and/or the arrangement is/are, however, particularly suitable for use on board of an aircraft.

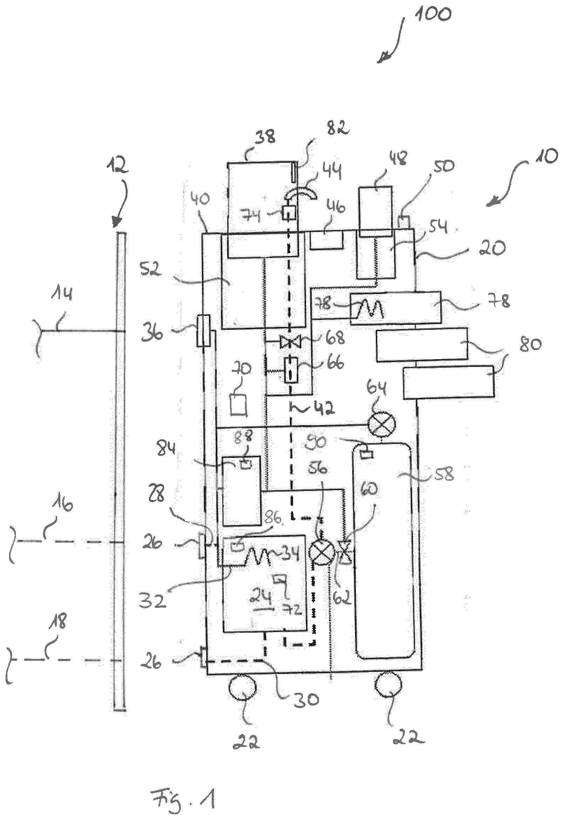

Preferred embodiments of the invention are now described in greater detail with reference to the appended schematic drawing, wherein
- Figure 1: shows an arrangement comprising a docking station and a mobile device for producing beverages, in particular coffee products.

An arrangement 100 depicted in Figure 1 comprises a mobile device 10 and a docking station 12. The arrangement 100 may be installed on board of a vehicle, in particular on board of an aircraft. In case the arrangement 100 is intended for use on board of an aircraft, the docking station 12, for example, may be placed in the region of an aircraft galley or bar. A day mode allows to actuate respective valves so that the complete unit can be soaked and rinsed when attached to the docking station 12. The docking station 12 comprises an electrical power supply system 14. In the embodiment of an arrangement 100 depicted in Figure 1, the electrical power supply system 14 of the docking station 12 is designed in the form of an electric line system which connects the docking station 12 to a central electrical power source of the vehicle. It is, however, also conceivable to equip the docking station 12 with a separate electrical power source, i.e. an electrical power source which is adapted to generate electrical power independent of a central electrical power source of the vehicle. An electrical power source of the docking station 12, for example, may be designed in the form of an accumulator, a fuel cell, and the like.

Further, the docking station 12 comprises a water supply system 16 and a water drain system 18. Both may be connected to a centralized water and waste water system of the vehicle. In the embodiment of an arrangement 100 depicted in Figure 1, the water supply system 16 of the docking station 12 is designed in the form of a fluid line system which is connected to a central water supply system of the vehicle such that the water supply system 16 of the docking station 12 can be provided with potable water from the central water supply system of the vehicle. Similarly, the water drain system 18 of the docking station 12 is designed in the form of a fluid line system which is connected to a central water drain system of the vehicle such that water discharged via the water drain system 18 of the docking station 12 can be drained into the central water drain system of the vehicle.

The mobile device 10 comprises a trolley base body 20 which is provided with wheels and breaks 22 such that the mobile device 10 can easily be moved to a desired location within the vehicle. A water tank 24 is disposed within the trolley base body 20. The water tank 24 is thermally insulated such that hot water received within the water tank 24 can be held at an elevated temperature level. The mobile 10 further comprises a water interface 26 which is connected to a water feed line 28 connecting the water interface 26 to the water tank 24. Further, a water discharge line 30 extends between the water interface 26 of the mobile device 10 and the water tank 24. Via the water interface 26, the mobile device 10, i.e. the water feed line 28 and the water discharge line 30 and hence the water tank 24, are connectable to the water supply system 16 and the water drain system 18 of the docking station 12. Hence, when the mobile device 10 is connected to the docking station 12, water from the central water supply system of the vehicle, via the water supply system 16 of the docking station 12 and the water feed line 28 of the mobile device 10 can be filled into the water tank 24 in a comfortable manner. Similarly, in case water should be drained from the water tank 24, the water can be drained via the water discharge line 30 of the mobile device 10 and the water drain system 18 of the docking station 12 to the central water drain system of the vehicle.

The mobile device 10 further comprises a heating device 32 which is provided with a heater coil 34 extending into the water tank 24 or alternatively a heater platen or blanket. Hence, by means of the heating device 32, water received within the water tank 24 can be heated to a desired elevated temperature. For example, water received within the water tank 24 can be heated to a temperature of approximately 80 to 85°C, wherein, once heated, due to the insulation of the water tank 24, the water within the water tank can substantially be held at that elevated temperature. The heating device 32 is connected to an electrical interface 36 of the mobile device 10, the electrical interface 36 being connectable to the electrical power supply system 14 of the docking station 12. Hence, when the mobile device 10 is connected to the docking station 12, the heating device 32 is supplied with electrical power from the central electrical power source of the vehicle via the electrical power supply system 14 of the docking station 12 and the electrical interface 36 of the mobile device 10.

Further, the mobile device 10 comprises a brewing unit 38 which is disposed in the region of a top surface 40 of the trolley base body 20. The brewing unit 38 is connected to the water tank 24 via a water supply line 42 such that hot water may be supplied from the water tank 24 to the brewing unit 38 via the water supply line 42. The brewing unit may be of any desired design and, in the embodiment of an arrangement 100 depicted in Figure 1, comprises a coffee/espresso brew head (not shown in Figure 1) and a brewing unit outlet 44 via which beverages produced by the brewing unit 38 can be dispensed from the brewing unit 38. The brewing unit outlet 44 comprises a coffee/espresso outlet (not shown in detail in Figure 1) for dispensing coffee/espresso and a hot water outlet (also not shown in detail in Figure 1) for dispensing hot water, for example for preparing tea. The hot water outlet is connected to the water supply line 42 via a bypass line (also not shown in Figure 1) bypassing the brew head for preparing coffee/espresso.

In the region of the top surface 40 of the trolley base body 20, a sink 46 is provided. In particular, the sink 46 is disposed underneath the brewing unit outlet 44 of the brewing unit 38 such that the sink 46 is suitable to receive liquids spilled from the brewing unit outlet 44 of the brewing unit 38. Further, a froth module 48 is arranged in the region of the top surface 40 of the trolley base body 20, the froth module 48 being suitable for preparing milk froth. Finally, a wireless device holder 50 is releasably attached in the region of the top surface 40 of the trolley base body 20. The wireless device holder 50 serves to support a wireless device via which payments for payable items supplied to passengers on board of the vehicle by means of the mobile device 10 can be executed using a wireless communication system of the vehicle, such as, for example, an in-flight entertainment system provided on board of an aircraft.

The trolley base body 20, adjacent to its top surface 40, is provided with a brewing unit receiving space 52 and a froth module receiving space 54. When the mobile device 10 is not in use, the brewing unit 38 can be lowered into the brewing unit receiving space 52. Similarly, the froth module 58 can be lowered into the froth module receiving space 54. When the brewing unit 38 and the froth module 58 are received within their respective receiving spaces 52, 54, the mobile device 10 has a reduced overall height allowing the mobile device 10 to be easily stored, for example, within a standard trolley storage provided, for example, on board of an aircraft, in particular in the region of an aircraft galley. Further, the brewing unit 38 is releasably connected to the trolley base body 20. Hence, the brewing unit 38 can easily be removed from the trolley base body 20, for example for cleaning and disinfecting.

During operation of the brewing unit 38, water is conveyed from the water tank 24 to the brewing unit 38 by means of a conveying device 56 which is arranged in the water supply line 42. The conveying device 56, which in the arrangement 100 according to Figure 1 is designed in the form of a pump, is driven by pressurized gas supplied to the conveying device 56 from a pressurized gas bottle 58. The supply of pressurized gas from the pressurized gas bottle 58 to the conveying device 56 is controlled by means of a pressurized gas control valve 60 arranged in a pressurized gas line 62.

The pressurized gas bottle 58 is filled with pressurized air, wherein a compressor 64 serves to refill the pressurized gas bottle 58 with pressurized air when empty. The compressor 64 is connected to the electrical interface 36 of the mobile device 10. Hence, the compressor 64 can be supplied with electrical power from the electrical power supply system 14 of the docking station 12, i.e. the compressor 64 can be supplied with electrical power provided by the central power source of the vehicle via the electrical power supply system 14 of the docking station 12 and the electrical interface 36 of the mobile device 10.

As an alternative, the water tank 24 may be designed in the form of a pressure tank suitable to store water at a pressure which allows the water to be conveyed from the water tank 24 to the brewing unit 38 in a pressure-driven manner, i.e. without the aid of an additional conveying device. In such an embodiment of the mobile device 10, the conveying device 56, the pressurized gas bottle 58, the pressurized gas control valve 60, the pressurized gas line 62 and the compressor 64 can be omitted. As a further alternative, only the compressor 64 can be omitted. In this case, the mobile device 10 may be equipped with an exchangeable pressurized gas bottle 58 which, when empty, is removed and replaced by a full bottle.

A flow meter 66 is arranged in the water supply line 42 downstream of the conveying device 56 and serves to sense the flow of water through the water supply line 42. A water flow control valve 68 is arranged in the water supply line 42 downstream of the flow meter 66 and serves to control the flow of water through the water supply line 42. The operation of the water flow control valve 38, like the operation of the pressurized gas control valve 60 and hence the operation of the conveying device 56, the operation of the heating device 32 and the operation of the compressor 64 is controlled by means of a central electronic control unit 70 of the mobile device 10. In particular, the electronic control unit 70 controls the operation of the water flow control valve 38 in dependence on signals indicative of the flow of water through the water supply line 42 which are provided to the electronic control unit 70 from the flow meter 66. The operation of the pressurized gas control valve 60, by means of the electronic control unit 70 is controlled in dependence on the operational state of the brewing unit 38. In particular, the pressurized gas control valve 60 is operated so as to allow the supply of pressurized gas from the pressurized gas bottle 38 to the conveying device 56 so as to drive the conveying device 56 when water is required to be supplied to the brewing unit 38 from the water tank 24.

The operation of the heating device 32, by means of the electronic control unit 70, is controlled in dependence on signals provided by a temperature sensor 72. The temperature sensor 72 is disposed within the water tank 24 and provides signals indicative of the temperature of the water received within the water tank 24 to the electronic control unit 70. In particular, the electronic control unit 70 controls the heating device 32 in order to heat the water received within the water tank 24 in case the temperature of the water within the water tank 24 drops below a predetermined threshold value, for example 80°C. Finally, the operation of the compressor 64, by means of the electronic control unit 70 is controlled in such a manner that the compressor 64 is put into operation when the mobile device 10 is connected to the docking station 12 and the pressurized air bottle 58 needs refilling.

Downstream of the water flow control valve 68, a supplementary heating device 74 is arranged in the water supply line 42. The supplementary heating device 74 is designed in the form of a flow heater that serves to supplementary heat the water flowing through the water supply line 42 in case the water does not have the desired temperature. It should, however, be noted that the supplementary heating device 74 is intended for only supplementary heating the water flowing through the water supply line 42 which is already pre-heated by means of the heating device 32. The operation of the supplementary heating device 74, like the operation of the heating device 32, is controlled by means of the electronic control unit 70 in dependence on the signals provided by the temperature sensor 72. In the embodiment of an arrangement 100 depicted in Figure 1, the supplementary heating device 74 is integrated into the brewing unit 38.

The mobile device 10 further comprises a first storage compartment 76 which is heated by means of a storage compartment heater 78. The first storage compartment 76 may be used, for example, for storing cups which should be pre-heated prior to being filled with hot beverages produced by means of the brewing unit 38. Further, two unheated storage compartments 80 are provided which may be used, for example, for storing food and/or cold beverages which are intended to be supplied to the passengers on board of the vehicle.

During operation of the mobile device 10, a user may select a desired beverage to be produced by the brewing unit 38 by actuating a selector button provided on a user actuatable control panel 82 of the brewing unit 38. Under the control of the electronic control unit 70, the various components of the mobile device 10 then are put into operation as necessary such that the desired beverage is prepared and dispensed from the brewing unit 38.

When the mobile device 10 is in use and hence disconnected from the docking station 12, electrical power is provided to the electrical power consumers of the mobile device 10 from a rechargeable accumulator 84. In particular, the rechargeable accumulator 84 is connected to the heating device 32, the brewing unit 38, the pressurized gas control valve 60, the flow meter 66, the water flow control valve 68, the froth module 48 and the storage compartment heater 78 in order to supply electrical power to these devices. Further, the accumulator 84 is connected to the electrical interface 36 of the mobile device 10. As a result, the accumulator 84 can be supplied with electrical power and hence be recharged when the mobile device 10 is connected to the docking station 12 and electrical power from the central electrical power source of the vehicle can be supplied to the rechargeable accumulator 84 via the electrical power supply system 14 of the docking station 12 and the electrical interface 36 of the mobile device 10.

Since the accumulator 84 serves to supply the electrical power consumers of the mobile device 10 with electrical power only while the mobile device 10 is in use and since the main consumption of electrical power for heating the water received within the water tank 24 occurs while the mobile device 10 is connected to the docking station 12, the accumulator 84 can be of a small size and of a particularly lightweight design. Further, recharging of the accumulator 84 is possible within a short period of time. The mobile device 10 therefore is particularly suitable for use on board of an aircraft, since it allows the production of high quality beverages, in particularly coffee products, without significant service interruptions, while simultaneously being lightweight and easy to operate.

Finally, the electronic control unit 70 is connected to a first sensing device 86 which is adapted to sense a water fill level within the water tank 24, a second sensing device 88 which is adapted to sense the charging state of the rechargeable accumulator 84 and a third sensing device 90 for sensing a pressure within the pressurized gas bottle 58. Based on the signals provided by the sensing devices 86, 88, 90, the electronic control unit 70 calculates the approximate number of remaining servings of beverages before the water tank 24 has to be refilled, the accumulator 84 has to be recharged and the pressurized gas bottle 58 has to be refilled or replaced and outputs a corresponding signal indicating the approximate number of remaining servings of beverages to a display device of the user actuatable control panel 82. Hence, a user is alerted early enough that the water tank 24 has to be refilled, that the rechargeable accumulator 84 has to be recharged and/or that the pressurized gas bottle has to be refilled or replaced.

## Claims

1. A mobile device (10) for producing beverages, in particular coffee products, on board of a vehicle, the mobile device (10) comprising:
- a trolley base body (20),
- a water tank (24),
- a brewing unit (38) connected to the water tank (24) via a water supply line (42), and
- a heating device (32) adapted to heat water received within the water tank (24), **characterized by** an electrical interface (36) which is connectable to an electrical power supply system (14) of a docking station (12) of the vehicle, the electrical interface (36) being connected to the heating device (32) in order to supply electrical power from the electrical power supply system (14) of the docking station (12) to the heating device (26), when the electrical interface (36) is connected to the electrical power supply system (14) of the docking station (12), wherein the water tank (24) is thermally insulated and configured to hold hot water received within the water tank (24) at an elevated temperature.

2. The mobile device according to Claim 1,
further comprising a conveying device (56) arranged in the water supply line (42) for conveying water from the water tank (24) to the brewing unit (38), the conveying device (56) being driven by pressurized gas supplied to the conveying device (56) from a pressurized gas bottle (58).

3. The mobile device according to Claim 2,
further comprising a pressurized gas control valve (60) arranged in a pressurized gas line (62) connecting the pressurized gas bottle (58) to the conveying device (56).

4. The mobile device according to Claim 2 or 3,
further comprising a compressor (64) for filling the pressurized gas bottle (58) with pressurized gas, the compressor (64) being connected to the electrical interface (36) in order to be supplied with electrical power from the electrical power supply system (14) of the docking station (12), when the electrical interface (36) is connected to the electrical power supply system (14) of the docking station (12).

5. The mobile device according to any one of Claims 1 to 4,
wherein the water tank (24) is designed in the form of a pressure tank suitable to store water at a pressure which allows water received within the water tank (24) to be supplied to the brewing unit (38) in a pressure-driven manner.

6. The mobile device according to any one of Claims 1 to 5,
further comprising at least one of:
- a flow meter (66) arranged in the water supply line (42) for sensing the flow of water through the water supply line (42), and
- a water flow control valve (68) arranged in the water supply line (42), in particular downstream of the flow meter (66), for controlling the flow of water through the water supply line (42).

7. The mobile device according to any one of Claims 1 to 6,
further comprising a supplementary heating device (32) arranged in the water supply line (42) for supplementary heating the water flowing through the water supply line (42).

8. The mobile device according to any one of Claims 1 to 7,
further comprising at least one of:
- a user actuatable control panel (82),
- a froth module (48) for preparing milk froth,
- a sink (46) which preferably is disposed underneath a brewing unit outlet (44) of the brewing unit (38),
- a first storage compartment (76) which is heated by means of a storage compartment heater (78),
- at least one second unheated storage compartment (80), and
- wireless device holder (50).

9. The mobile device according to any one of Claims 1 to 8,
further comprising a rechargeable accumulator (84) which is connected to at least one electrical power consumer of the mobile device (10) in order to supply electrical power to the at least one electrical power consumer of the mobile device (10) when the electrical interface (36) of the mobile device (10) is disconnected from the electrical power supply system (14) of the docking station (12), and which further is connected to the electrical interface (36) in order to be supplied with electrical power from the electrical power supply system (14) of the docking station (12) when the electrical interface (36) is connected to the electrical power supply system (14) of the docking station (12).

10. The mobile device according to any one of Claims 1 to 9,
further comprising a control unit (70) which is connected to at least one of a first sensing device (86) for sensing a water fill level within the water tank (24), a second sensing device (88) for sensing the charging state of the rechargeable accumulator (84) and a third sensing device for sensing a pressure within the pressurized gas bottle, and which is adapted calculate the approximate number of remaining servings of beverages based on the signals provided by the at least one of the first and the second sensing device (), and/or which is adapted to operate the mobile device (10) in a cleaning and disinfection/decalcification mode, allowing automatic cleaning and/or decalcification of the mobile device (10).

11. The mobile device according to any one of Claims 1 to 10,
further comprising a water interface (26) which is connectable to at least one of a water supply system (16) and a water drain system (18) of the docking station (12), wherein the water drain system (18) preferably is adapted to allow drainage of water/residual water by gravity only.

12. The mobile device according to any one of Claims 1 to 11,
wherein at least one of the brewing unit (38), a brew head of the brewing unit (38) and the froth module (48) is releasably connected to the trolley base body (20) and/or wherein at least one of the brewing unit (38) and the froth module (48) is/are rectractably connected to the trolley base body (20).

13. Arrangement (100) comprising:
- the mobile device (10) according to any one of Claims 1 to 12, and
- a docking station (12) of the vehicle comprising an electrical power supply system (14) which is connectable to the electrical interface (36) of the mobile device (10).

14. The arrangement according to claim 13,
wherein the docking station (12) further comprises at least one of a water supply system (16) and a water drain system (18) which is connectable to a water interface (26) of the mobile device (10).

15. Use of a mobile device (10) according to any one of Claims 1 to 12 and/or an arrangement (100) according to Claim 13 or 14 on board of an aircraft.

## Patentansprüche

1. Mobile Vorrichtung (10) zur Herstellung von Getränken, insbesondere Kaffeeprodukten, an Bord eines Fahrzeugs, wobei die mobile Vorrichtung (10) Folgendes umfasst:
- einen Wagenbasiskörper (20),
- einen Wasserbehälter (24),
- eine Zubereitungseinheit (38), die mit dem Wasserbehälter (24) über eine Wasserversorgungsleitung (42) verbunden ist, und
- eine Heizvorrichtung (32), die dazu ausgelegt ist, in dem Wasserbehälter (24) eingegangenes Wasser zu heizen, **gekennzeichnet durch** eine elektrische Schnittstelle (36), die mit einem Elektroenergie-Versorgungssystem (14) einer Dockingstation (12) des Fahrzeugs verbindbar ist, wobei die elektrische Schnittstelle (36) mit der Heizvorrichtung (32) verbunden ist, um Elektroenergie von dem Elektroenergie-Versorgungssystem (14) der Dockingstation (12) zu der Heizvorrichtung (26) zu liefern, wenn die elektrische Schnittstelle (36) mit dem Elektroenergie-Versorgungssystem (14) der Dockingstation (12) verbunden ist, wobei der Wasserbehälter (24) thermisch isoliert und dazu ausgelegt ist, in dem Wasserbehälter (24) eingegangenes heißes Wasser auf einer erhöhten Temperatur zu halten.

2. Mobile Vorrichtung nach Anspruch 1,
ferner umfassend eine Fördervorrichtung (56), die in der Wasserversorgungsleitung (42) angeordnet ist, um Wasser von dem Wasserbehälter (24) zu der Zubereitungseinheit (38) zu fördern, wobei die Fördervorrichtung (56) durch Druckgas angetrieben wird, das von einer Druckgasflasche (58) zu der Fördervorrichtung (56) geliefert wird.

3. Mobile Vorrichtung nach Anspruch 2,
ferner umfassend ein Druckgasregelventil (60), das in einer Druckgasleitung (62) angeordnet ist, welche die Druckgasflasche (58) mit der Fördervorrichtung (56) verbindet.

4. Mobile Vorrichtung nach Anspruch 2 oder 3,
ferner umfassend einen Kompressor (64) zum Füllen der Druckgasflasche (58) mit Druckgas, wobei der Kompressor (64) mit der elektrischen Schnittstelle (36) verbunden ist, um von dem Elektroenergie-Versorgungssystem (14) der Dockingstation (12) mit Elektroenergie versorgt zu werden, wenn die elektrische Schnittstelle (36) mit dem Elektroenergie-Versorgungssystem (14) der Dockingstation (12) verbunden ist.

5. Mobile Vorrichtung nach einem der Ansprüche 1 bis 4,
wobei der Wasserbehälter (24) in der Form eines Druckbehälters gestaltet ist, der geeignet ist, Wasser mit einem Druck zu speichern, der gestattet, dass innerhalb des Wasserbehälters (24) eingegangenes Wasser in einer druckgetriebenen Weise der Zubereitungseinheit (38) zugeführt wird.

6. Mobile Vorrichtung nach einem der Ansprüche 1 bis 5, ferner umfassend mindestens eines von:
- einem Strömungsmesser (66), der in der Wasserversorgungsleitung (42) angeordnet ist, um den Strom von Wasser durch die Wasserversorgungsleitung (42) zu messen, und
- einem Wasserstromregelventil (68), das in der Wasserversorgungsleitung (42), insbesondere dem Strömungsmesser (66) nachgelagert, angeordnet ist, um den Strom von Wasser durch die Wasserversorgungsleitung (42) zu regeln.

7. Mobile Vorrichtung nach einem der Ansprüche 1 bis 6,
ferner umfassend eine ergänzende Heizvorrichtung (32), die in der Wasserversorgungsleitung (42) angeordnet ist, um das durch die Wasserversorgungsleitung (42) strömende Wasser ergänzend zu heizen.

8. Mobile Vorrichtung nach einem der Ansprüche 1 bis 7,
ferner umfassend mindestens eines von:
- einem durch einen Benutzer betätigbaren Bedienfeld (82),
- einem Aufschäummodul (48) zum Zubereiten von Milchschaum,
- einem Ausguss (46), der vorzugsweise unter einem Zubereitungseinheit-Auslass (44) der Zubereitungseinheit (38) angeordnet ist,
- einem ersten Aufbewahrungsraum (76), der mittels eines Aufbewahrungsraum-Heizers (78) beheizt ist,
- mindestens einem zweiten, unbeheizten Aufbewahrungsraum (80), und
- einem Halter für eine drahtlose Vorrichtung (50).

9. Mobile Vorrichtung nach einem der Ansprüche 1 bis 8,
ferner umfassend einen nachladbaren Akkumulator (84), der an mindestens einen Elektroenergieverbraucher der mobilen Vorrichtung (10) angeschlossen ist, um Elektroenergie zu dem mindestens einen Elektroenergieverbraucher der mobilen Vorrichtung (10) zu liefern, wenn die elektrische Schnittstelle (36) der mobilen Vorrichtung (10) von dem Elektroenergie-Versorgungssystem (14) der Dockingstation (12) getrennt ist, und der ferner mit der elektrischen Schnittstelle (36) verbunden ist, um von dem Elektroenergie-Versorgungssystem (14) der Dockingstation (12) mit Elektroenergie versorgt zu werden, wenn die elektrische Schnittstelle (36) mit dem Elektroenergie-Versorgungssystem (14) der Dockingstation (12) verbunden ist.

10. Mobile Vorrichtung nach einem der Ansprüche 1 bis 9,
ferner umfassend eine Regeleinheit (70), die verbunden ist mit mindestens einer von einer ersten Messvorrichtung (86) zum Messen eines Wasserfüllstands innerhalb des Wasserbehälters (24), einer zweiten Messvorrichtung (88) zum Messen des Ladestatus des nachladbaren Akkumulators (84) und einer dritten Messvorrichtung zum Messen eines Drucks innerhalb der Druckgasflasche, und die dazu ausgelegt ist, die annähernde Anzahl verbleibender Portionen von Getränken basierend auf den Signalen zu berechnen, die von der mindestens einen von der ersten und der zweiten Messvorrichtung () bereitgestellt werden, und/oder die dazu ausgelegt ist, die mobile Vorrichtung (10) in einem Reinigungs- und Desinfektions-/Entkalkungsmodus zu betreiben, um ein automatisches Reinigen und/oder Entkalken der mobilen Vorrichtung (10) zu gestatten.

11. Mobile Vorrichtung nach einem der Ansprüche 1 bis 10,
ferner umfassend eine Wasserschnittstelle (26), die an mindestens eines von einem Wasserversorgungssystem (16) und einem Wasserablasssystem (18) der Dockingstation (12) anschließbar ist, wobei das Wasserablasssystem (18) vorzugsweise ausgelegt ist, um ein Ablassen von Wasser/Restwasser allein durch Schwerkraft zu gestatten.

12. Mobile Vorrichtung nach einem der Ansprüche 1 bis 11,
wobei mindestens eines von der Zubereitungseinheit (38), einem Zubereitungskopf der Zubereitungseinheit (38) und dem Aufschäummodul (48) lösbar mit dem Wagenbasiskörper (20) verbunden ist, und/oder wobei mindestens eines von der Zubereitungseinheit (38) und dem Aufschäummodul (48) lösbar mit dem Wagenbasiskörper (20) verbunden ist.

13. Anordnung (100), die Folgendes umfasst:
- die mobile Vorrichtung (10) nach einem der Ansprüche 1 bis 12, und
- eine Dockingstation (12) des Fahrzeugs, die ein Elektroenergie-Versorgungssystem (14) umfasst, das mit der elektrischen Schnittstelle (36) der mobilen Vorrichtung (10) verbindbar ist.

14. Anordnung nach Anspruch 13,
wobei die Dockingstation (12) ferner mindestens eines von einem Wasserversorgungssystem (16) und einem Wasserablasssystem (18) umfasst, das mit einer Wasserschnittstelle (26) der mobilen Vorrichtung (10) verbindbar ist.

15. Verwenden einer mobilen Vorrichtung (10) nach einem der Ansprüche 1 bis 12 und/oder einer Anordnung (100) nach Anspruch 13 oder 14 an Bord eines Flugzeugs.

## Revendications

1. Dispositif mobile (10) de production boissons, en particulier de produits de café, le dispositif mobile (10), comprenant:
un corps de base de chariot (20),
un réservoir d'eau (24),
une unité d'infusion (38) connectée au réservoir d'eau (24) par l'intermédiaire d'une ligne d'alimentation en eau (42), et
un dispositif de chauffage (32) adapté pour chauffer l'eau reçue à l'intérieur du réservoir d'eau (24), **caractérisé par** une interface électrique (36) qui peut être connectée à un système d'alimentation en courant électrique (14) d'une station d'accueil (12) du véhicule, l'interface électrique (36) étant connectée au dispositif de chauffage (32) dans le but de fournir du courant électrique à partir du système d'alimentation en courant électrique (14) de la station d'accueil (12) au dispositif de chauffage (26), lorsque l'interface électrique (36) est connectée au système d'alimentation en courant électrique (14) de la station d'accueil (12), dans lequel le réservoir d'eau (24) est isolé thermiquement et est configuré de manière à contenir de l'eau chaude reçue à l'intérieur du réservoir d'eau (24) à une température élevée.

2. Dispositif mobile selon la revendication 1, comprenant en outre un dispositif de transport (56) agencé dans la ligne d'alimentation en eau (42) afin de transporter de l'eau à partir du réservoir d'eau (24) jusqu'à l'unité d'infusion (38), le dispositif de transport (56) étant entraîné par un gaz sous pression fourni au dispositif de transport (56) à partir d'une bouteille de gaz sous pression (58).

3. Dispositif mobile selon la revendication 2, comprenant en outre une soupape de commande de gaz sous pression (60) agencée dans une ligne de gaz sous pression (62) qui relie la bouteille de gaz sous pression (58) au dispositif de transport (56).

4. Dispositif mobile selon la revendication 2 ou 3, comprenant en outre un compresseur (64) pour remplir la bouteille de gaz sous pression (58) avec du gaz sous pression, le compresseur (64) étant connecté à l'interface électrique (36) dans le but d'être alimenté en courant électrique à partir du système d'alimentation en courant électrique (14) de la station d'accueil (12), lorsque l'interface électrique (36) est connectée au système d'alimentation en courant électrique (14) de la station d'accueil (12).

5. Dispositif mobile selon l'une quelconque des revendications 1 à 4, dans lequel le réservoir d'eau (24) est conçu sous la forme d'un réservoir de pression approprié pour stocker de l'eau à une pression qui permet de transmettre l'eau reçue à l'intérieur du réservoir d'eau (24) à l'unité d'infusion (38) d'une façon entraînée par pression.

6. Dispositif mobile selon l'une quelconque des revendications 1 à 5, comprenant en outre au moins un composant parmi:
un débitmètre (66) agencé dans la ligne d'alimentation en eau (42) afin de détecter l'écoulement d'eau à travers la ligne d'alimentation en eau (42), et
une soupape de régulation d'écoulement d'eau (68) agencée dans la ligne d'alimentation en eau (42), en particulier en aval du débitmètre (66), afin de commander l'écoulement d'eau à travers la ligne d'alimentation en eau (42).

7. Dispositif mobile selon l'une quelconque des revendications 1 à 6, comprenant en outre un dispositif de chauffage supplémentaire (32) agencé dans la ligne d'alimentation en eau (42) afin de chauffer davantage l'eau qui s'écoule à travers la ligne d'alimentation en eau (42).

8. Dispositif mobile selon l'une quelconque des revendications 1 à 7, comprenant en outre au moins un composant parmi:
un panneau de commande actionnable par un utilisateur (82),
un module de moussage (48) pour préparer de la mousse de lait,
un évier (46) qui est de préférence disposé en dessous d'une sortie (44) de l'unité d'infusion (38),
un premier compartiment de stockage (76) qui est chauffé à l'aide d'un dispositif de chauffage de compartiment de stockage (78),
au moins un deuxième compartiment de stockage non chauffé(80), et
un support de dispositif sans fil (50).

9. Dispositif mobile selon l'une quelconque des revendications 1 à 8, comprenant en outre un accumulateur rechargeable (84) qui est connecté à au moins un consommateur de courant électrique du dispositif mobile (10) dans le but de fournir du courant électrique audit au moins un consommateur de courant électrique du dispositif mobile (10) lorsque l'interface électrique (36) du dispositif mobile (10) est déconnectée du système d'alimentation en courant électrique (14) de la station d'accueil (12), et qui est en outre connecté à l'interface électrique (36) dans le but d'être alimenté en courant électrique à partir du système d'alimentation en courant électrique (14) de la station d'accueil (12) lorsque l'interface électrique (36) est connectée au système d'alimentation en courant électrique (14) de la station d'accueil (12).

10. Dispositif mobile selon l'une quelconque des revendications 1 à 9, comprenant en outre une unité de commande (70) qui est connectée à au moins un composant parmi un premier dispositif de détection (86) pour détecter un niveau de remplissage d'eau à l'intérieur du réservoir d'eau (24), un deuxième dispositif de détection (88) pour détecter l'état de charge de l'accumulateur rechargeable (84), et un troisième dispositif de détection pour détecter une pression à l'intérieur de la bouteille de gaz sous pression, et qui est adaptée pour calculer le nombre approximatif d'unités restantes de boissons sur la base de signaux émis par ledit au moins un dispositif parmi le premier et le deuxième dispositifs de détection, et/ou qui est adaptée pour actionner le dispositif mobile (10) dans un mode de nettoyage et de désinfection/décalcification, permettant un nettoyage automatique et/ou une décalcification automatique du dispositif mobile (10).

11. Dispositif mobile selon l'une quelconque des revendications 1 à 10, comprenant en outre une interface d'eau (26) qui peut être connectée à au moins un composant parmi un système d'alimentation en eau (16) et un système de drainage d'eau (18) de la station d'accueil (12), dans lequel le système de drainage d'eau (18) est de préférence adapté pour permettre le drainage de l'eau/de l'eau résiduelle par gravité seulement.

12. Dispositif mobile selon l'une quelconque des revendications 1 à 11, dans lequel au moins un composant parmi l'unité d'infusion (38), une tête d'infusion de l'unité d'infusion (38) et le module de moussage (48) est connecté de façon détachable au corps de base de chariot (20) et/ou dans lequel au moins un composant parmi l'unité d'infusion (38) et le module de moussage (48) est connecté de façon rétractable au corps de base de chariot (20).

13. Agencement (100) comprenant:
le dispositif mobile (10) selon l'une quelconque des revendications 1 à 12, et
une station d'accueil (12) du véhicule comprenant un système d'alimentation en courant électrique (14) qui peut être connecté à l'interface électrique (36) du dispositif mobile (10).

14. Agencement selon la revendication 13, dans lequel la station d'accueil (12) comprend en outre au moins un composant parmi un système d'alimentation en eau (16) et un système de drainage d'eau (18) qui peut être connecté à une interface d'eau (26) du dispositif mobile (10).

15. Utilisation d'un dispositif mobile (10) selon l'une quelconque des revendications 1 à 12 et/ou d'un agencement (100) selon la revendication 13 ou 14 à bord d'un aéronef.
